# EUROPEAN PATENT APPLICATION

(11) **EP 4 775 317 A1**
(43) Date of publication of application: **15.07.2026**
(21) Application number: 24862157.5
(22) Date of filing: 06.09.2024
(51) Int. Cl.: B09B 3/70

(54) **METHOD FOR TREATING HETEROGENEOUS SOLID WASTE WITHOUT PRIOR SEPARATION**

(30) Priority: 07.09.2023 ES 202330755
(71) Applicant: Thermowaste, S.L., 08403 Granollers (Barcelona) (ES)
(72) Inventor: RIBAS LÓPEZ, Rafael, 08403 Granollers (Barcelona) (ES); RIBAS MARTÍNEZ, Óscar, 08403 Granollers (Barcelona) (ES)
(74) Representative: Espiell Gomez, Ignacio
(86) International application number: PCT/ES2024/070544
(87) International publication number: WO 2025/052022

(57) **Abstract**

The present invention relates to a method for treating heterogeneous solid waste, municipal waste, industrial waste comparable to urban waste, and hospital waste, the method comprising: an initial step A) of continuously introducing waste, without prior separation, into a sealed and pressurised reactor (1) of varying dimensions; a step B) of maintaining the waste in the reactor (1) for 20 to 60 minutes, during which time the following is carried out: a step B1) of injecting water steam, at a pressure between 2 and 12 bar, to maintain a constant and stable temperature between 100°C and 180°C, and a stream of hydroxyl radical (OH), and a step B2) of constantly applying motion and stirring to the waste; and a final step C) of extracting waste, also doing so continuously, once the residence time in the reactor (1) has been exceeded.

## Description

### OBJECT OF THE INVENTION

As expressed in the title of the present specification, the invention relates to a method for treating heterogeneous solid waste without prior separation, i.e., without having to sort the waste or take it out of the bag.

The object of the present invention relates to a technical method specifically intended for the treatment of: a) municipal solid waste, b) industrial waste comparable to urban waste, c) hospital waste, and d) Tetrapack^{®}-type beverage carton containers; which allows transforming the waste, without the need for prior separation (which means that in each of the categories a), b), c), and d), the waste can be mixed, without prior sorting, as it is collected at its point of origin, although some categories will not be mixed with others during the method in order to maintain traceability from the point of origin), into clean and manageable by-products that can be reused in the form of raw materials, for which the method is based essentially on the disinfection and sterilisation of waste, as well as its morphological transformation in order to facilitate the subsequent sorting thereof by means of the combined application of a stream of water steam and a stream of hydroxyl radical inside a sealed and pressurised reactor in which said waste is introduced.

### FIELD OF APPLICATION OF THE INVENTION

The field of application of the present invention is comprised within the sector of the industry dedicated to the processing and transformation of waste, mainly urban solid waste, waste comparable to urban waste, and hospital waste.

### BACKGROUND OF THE INVENTION

Solid waste, specifically municipal waste, industrial waste comparable to urban waste, Tetrapack^{®}-type beverage carton containers, and hospital waste, hereinafter "waste", is characterised by having a highly heterogeneous composition which includes metallic elements, plastics in all their variants and polymers, pieces of mineral origin such as stones, ceramics, shells, bones, organic compounds such as food scraps, faeces, dead animals, and other animal remains, or cellulose compounds, textile fibres, fibres of plant origin such as paper, cardboard, or pruning waste, among others. Furthermore, the particle size distribution of waste may vary from a few tenths of a millimetre to several centimetres.

Moreover, from a biochemical viewpoint, waste is characterised by its high pathogen content, pathogen being a term typically used to describe microorganisms such as viruses, bacteria, and fungi, among others infectious agents that can cause diseases in human beings and animals.

In turn, mainly as a result of the presence of organic matter, waste has a mean pH of between 6 and 8, while having a moisture of between 40% and 60% (w/w).

These conditions of the waste complicate not only the sorting mechanisms, but also the reuse of the materials obtained. When a plastic container or a metal container has been in contact with organic elements, it is a very likely that it will carry traces of those organic components on its walls which, in room temperature conditions, will allow pathogen proliferation as a result of aerobic decomposition. Therefore, there is a need to not only correctly separate waste to reutilise the materials making up same, but also to properly clean and disinfect said waste.

Additionally, Tetrapack^{®}-type beverage carton containers, being multilayer containers generally manufactured with 75% cardboard, 20% polyethylene plastic, and 5% aluminium, are particularly difficult to recycle since the polyethylene plastic cannot be readily separated from the aluminium.

Environmental policies aimed at sorting at the point of origin fail to take into account not only the high logistics cost and the environmental pollution generated as a result of selective collection, but also this fundamental aspect associated with waste cleaning.

For these reasons, said European directives have already shown a slow and inefficient degree of implementation, as well as certain refusal on the part of society to carry out separation work at the point of origin.

Therefore, the purpose of the present invention is to provide a practical solution that allows solving both problems in a single waste treatment operation, through a new method which simultaneously concentrates the actions of disinfecting waste, even Tetrapack^{®}-type beverage carton containers, and morphologically transforming same in order to facilitate the subsequent sorting thereof.

Moreover, and in reference to the current state of the art, it should be noted that at least the applicant itself is unaware of any other method for treating waste that has been performed or is being performed having technical features identical or similar to those of the present invention.

### DESCRIPTION OF THE INVENTION

The method for treating heterogeneous solid waste without prior separation proposed by the invention is configured as the ideal solution for carrying out the aforementioned purpose, with the characterising details that make it possible and distinguish it being conveniently included in the final claims accompanying the present description.

Specifically, as set forth above, the invention proposes a technical method specifically intended for the treatment of municipal solid waste, industrial waste comparable to urban waste, hospital waste, and Tetrapack^{®}-type beverage carton containers, which allows transforming the waste, without the need for prior separation (the different types of waste can be mixed in bags), into clean and manageable by-products that can be reused in the form of raw materials.

To that end, the method is developed inside a sealed and pressurised reactor of varying dimensions depending on its capacity.

Waste, without prior separation (the different types of waste can be mixed and inside bags), is continuously introduced into the reactor (this means that waste keeps entering the reactor from the outside at a rate of between 1000 and 10,000 kg per hour, without an airlock method or a batch system).

When waste enters the reactor, the reactor is already in the method pressure and temperature conditions to ensure an immediate thermal shock.

The waste remains inside the reactor for a period of time ranging from 20 to 60 minutes.

Preferably, through two different sources, there are injected into the reactor, in a regulated manner, on the one hand, water steam at a temperature ranging from 100°C to 180°C, and, on the other hand, a stream of hydroxyl radical (OH). The regulation of steam entry will be determined by the working setpoint value and the pressure provided for the method which will range from 1 bar to 9 bar absolute.

The confluence of the hydroxyl radical with the water steam causes a controlled hydroxylation reaction where new water molecules and new hydroxyl radicals are generated, however, the most important aspect is that the nano-sized hydroxyl radicals penetrate deep into the fibres of the waste, killing and/or inhibiting pathogens.

Steam by itself is already an important disinfectant agent due to heat transfer, however, the size of its molecules is 6000 nm, while the hydroxyl radicals contained in water have a diameter between 5 and 20 nm, facilitating their access to the most remote points of the waste material to be disinfected.

Furthermore, as it remains inside the reactor, the waste is subjected to constant motion and stirring, which facilitates its tearing, morphological homogenisation, and the access of the steam and hydroxyl radicals to all the parts thereof.

The method taking place inside the reactor allows, particularly at the temperature reached, the ability to separate the different materials making up Tetrapack^{®}-type beverage carton containers, even separating the polyethylene plastic from the aluminium.

After the time of the method has been exceeded, the waste is extracted from the reactor, also doing so continuously (this means that the waste keeps exiting the reactor, without the use of airlocks or batches), changing from working pressure to the atmospheric pressure of the outside.

The most significant evidence of the waste at the outlet of the reactor are as follows:
- A volume reduction between 20% and 90%.
- Pathogen elimination.
- Foul odour elimination.
- Organic matter homogenisation in the form of granular biomass.
- Densification of plastics that melt at a lower temperature, generally obtaining them in spherical shapes.

Finally, it should be mentioned that, advantageously, the described method can be carried out by means of using specific transportable equipment, for example, modular transportable equipment like the one described in document P202131096, which belongs to the applicant of the present invention, and which basically comprises a reactor made up of several modules that can be disassembled and coupled together, each of which internally incorporates means to carry out a specific function that, at least, covers the function of loading, cleaning and morphological transformation of process waste, discharge and dehydration, and control and electrical power.

### DESCRIPTION OF THE DRAWINGS

To complete the description provided herein, and for the purpose of helping to make the features of the invention more readily understandable, this description is accompanied by a set of drawings constituting an integral part of the same, which by way of illustration and not limitation represents the following:
Figure 1 shows, in a block diagram, a representation of the flow of the steps comprised in the method object of the invention; and
Figure 2 shows a schematic perspective view of an example of equipment for carrying out the method of the invention.

### PREFERRED EMBODIMENT OF THE INVENTION

In view of the described figures, and according to the numbering used therein, it can be seen how the method for treating heterogeneous solid waste without prior separation (the different types of waste can be mixed in bags) essentially comprises the following steps:
- an initial step A) of continuously introducing waste to be treated, without prior separation, into a sealed reactor (1) which is already pressurised and at a method temperature, without the use of airlocks, without the waste entering in batches;
- a step B) of maintaining the waste inside the reactor (1) for a period of time between 20 and 60 minutes, during which time the following is carried out:
   - a step B1) of injecting dry saturated steam at a pressure between 2 and 12 bar into the reactor (1), while the waste remains inside the reactor in an atmosphere with a stable pressure and a also stable temperature, ranging from 100°C to 180°C, depending on the characteristics of the waste to be processed, and of injecting a stream of hydroxyl radical (OH) at a flow rate ranging from 0 to 5000 m³ per minute into the reactor; and
   - a step B2) of constantly applying motion and stirring to the waste as it remains inside the reactor (1) to facilitate its tearing, morphological homogenisation, and contact with the steam and hydroxyl radicals in all the parts thereof;
- a final step C) of extracting the waste from the reactor (1), once the residence time has been exceeded, in a continuous method, preferably taking a time between 1 and 60 seconds, in order to regenerate a reversed thermal shock and without depressurising or cooling the reactor.

Preferably, the pressure provided inside the reactor (1), at least during steps (B1-B2) when the waste remains in the reactor, ranges from 1 bar to 9 bar absolute.

Preferably, the injection of water steam and the stream of hydroxyl radical in step (B1) is performed through two different external sources.

Preferably, waste is continuously introduced into the equipment without the use of airlocks, without the waste entering in batches in an operation, preferably for a period of time between 1 and 60 seconds, without the need for prior separation, causing thermal shock upon entering the equipment.

Also preferably, the waste continuously exits the equipment to the outside thereof, i.e., at an atmospheric pressure and temperature, without interruptions, without the use of airlocks, or product batches, and without the need to pressurise or depressurise the equipment.

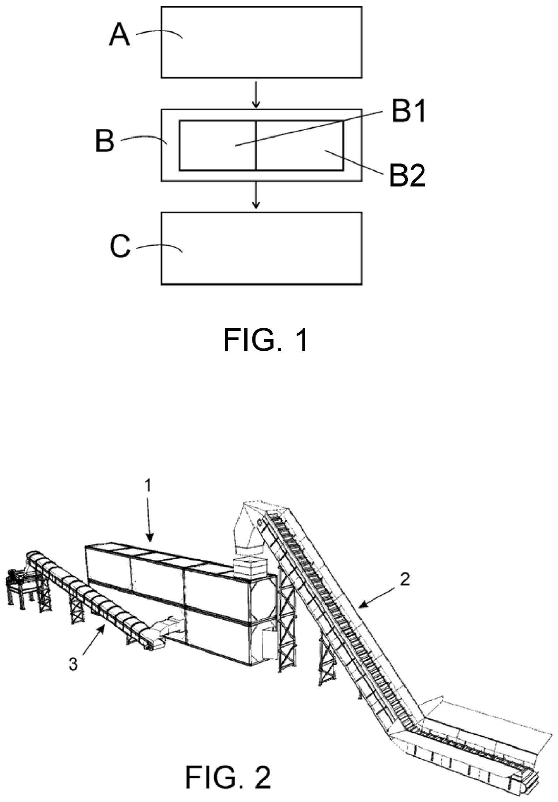

Considering Figure 2, a possible example of equipment for carrying out the described method can be seen, in which there is contemplated a reactor (1) with a first special mechanism for continuously introducing waste without steam leakage and a possible depressurisation of the reactor (2), and with a second mechanism for continuously extracting waste without steam leakage or a possible depressurisation of the equipment (3).

Having sufficiently described the nature of the present invention, as well as the ways in which it may be implemented, it is not considered necessary to elaborate on the explanation thereof in order for a person skilled in the art to understand the scope of the invention and the advantages derived therefrom.

## Claims

1. A method for treating heterogeneous solid waste, particularly municipal waste, industrial waste comparable to urban waste, and hospital waste, **characterised by** comprising at least:
- an initial step A) of continuously introducing waste to be treated, without prior separation, into a sealed reactor (1) which is already pressurised and at a method temperature, without the use of airlocks, without the waste entering in batches;
- a step B) of maintaining the waste inside the reactor (1) for a period of time between 20 and 60 minutes, during which time the following is carried out:
- a step B1) of injecting into the reactor (1), while the waste remains therein, water steam at a pressure between 2 and 12 bar, to maintain a constant and stable temperature between 100°C and 180°C, while injecting at the same time a stream of hydroxyl radical (OH), at a flow rate ranging from 0 to 5000 m³ per minute, and
- a step B2) of constantly applying motion and stirring to the waste as it remains inside the reactor (1) to facilitate its tearing, morphological homogenisation, and the access of the steam and hydroxyl radicals to all the parts thereof; and
- a final step C) of extracting the waste from the reactor (1), also doing so continuously, without the need for airlocks, without extraction in batches, without having to depressurise the equipment.

2. The method for treating heterogeneous solid waste according to claim 1, **characterised in that** the pressure provided inside the reactor (1), at least during steps (B1-B2) when the waste remains in the reactor, ranges from 1 bar to 9 bar absolute.

3. The method for treating heterogeneous solid waste according to any of the preceding claims, **characterised in that** the injection of water steam and the stream of hydroxyl radical in step (B1) is performed through two different external sources.

4. The method for treating heterogeneous solid waste according to any of the preceding claims, **characterised in that** the waste changing from atmospheric pressure to treatment pressure as it enters the equipment and vice versa as the waste exits the equipment occurs continuously without interruptions, without the use of airlocks, or product batches, and without the need to pressurise or depressurise the equipment.
